# DEMANDE DE BREVET EUROPEEN

(11) **EP 2 725 746 A1**
(43) Date de publication de la demande: **30.04.2014**
(21) Numéro de dépôt: 13190526.7
(22) Date de dépôt: 28.10.2013
(51) Int. Cl.: H04L 12/28, H04L 29/08, G06F 17/30

(54) **Procédé d'indexation des contenus d'un dispositif de stockage de contenus numériques connecté à un boitier d'accès à internet**

(30) Priorité: 29.10.2012 FR 1260311
(71) Demandeur: Bouygues Telecom, 75116 Paris (FR)
(72) Inventeur: Dauchy, Jérôme, 78470 Saint Rémy Lès Chevreuse (FR)
(74) Mandataire: Regimbeau

(57) **Abrégé**

La présente invention concerne un procédé d'indexation des contenus d'un dispositif de stockage de contenus numériques (1) connecté à un boitier d'accès à Internet (2), caractérisé en ce qu'il comprend des étapes de :
(a) Mise en oeuvre d'une indexation partielle des contenus du dispositif de stockage (1) de sorte à générer une liste brute des contenus du dispositif de stockage (1) ;
(b) Transmission de ladite liste à un serveur (3) connecté au boitier d'accès à Internet (2) via le réseau Internet (10) et stockage sur des moyens de stockage de données du serveur (3) ;
(c) Traitement de ladite liste par des moyens de traitement du serveur (3) de sorte à identifier au moins un contenu du dispositif de stockage (1) pour lesquels des informations additionnelles d'indexation sont nécessaires ;
(d) Pour chaque contenu identifié pour lequel des informations additionnelles d'indexation sont nécessaires, requête par le serveur (3) d'une transmission depuis le dispositif de stockage (1) d'au moins un fragment dudit contenu ;
(e) Traitement par les moyens de traitement de données du serveur (3) desdits fragments de contenus par le serveur (3) de sorte à construire un index complet des contenus dudit dispositif de stockage (1).

## Description

La présente invention concerne le domaine du partage de contenus numériques par Internet, et vise plus précisément un procédé d'indexation de moyens de stockage connectés à un boitier d'accès à Internet.

### ETAT DE L'ART

L'accès à l'Internet est de nos jours couramment obtenu grâce à des équipements de type IAD (« Integrated Access Device ») proposés par les fournisseurs d'accès à Internet et communément appelés « box ».

Ces boitiers d'accès à Internet permettent de connecter un client du fournisseur d'accès à son réseau opérateur qui fait l'interface avec le réseau Internet. Les boitiers d'accès à Internet sont en cela des équipements de terminaison de réseau, ou « consumer edges » (CE). La connexion physique au réseau opérateur se fait le plus souvent via xDSL, câble, ou fibre optique.

Les boitiers actuellement déployés embarquent le plus souvent un serveur de mise à disposition de contenus numériques (DMS, pour « Digital Media Server »). Ces contenus numériques peuvent être stockés sur le boitier lui-même ou sur un périphérique connecté (disque dur d'un ordinateur, disque externe, clé usb directement branchée sur le boitier d'accès à Internet, etc.).

Les DMS mettent les contenus numériques à disposition d'équipements génériques de lecture appelés les DMP (« Digital Media Player ») via le réseau. Ces équipements peuvent être notamment un ordinateur, une tablette ou encore un téléviseur DLNA (« Digital Living Network Alliance »). Cette technologie (DMS/DMP) permet par exemple de consulter un média stocké sur un périphérique connecté à un premier boitier d'accès à Internet depuis un lecteur connecté à un deuxième boitier d'accès à Internet.

L'utilisation du serveur DMS d'un boitier d'accès à Internet (ou alternativement d'une Set-Top Box, un ordinateur, etc.) nécessite d'indexer les contenus numériques, c'est-à-dire d'explorer intégralement les moyens de stockage sur lesquels ils se trouvent de sorte à construire une table (l'index) référençant ces contenus numériques et leurs informations/métadonnées.

Avec l'apparition de disques durs disposant de capacité de stockage de plus en plus élevée (au-delà du Téraoctet), cette opération devient problématique. Les boitiers d'accès à Internet sont en effet des équipements qui, pour des questions de coût, sont rarement équipés de processeurs puissants (les fonctions réseaux ne consomment que très peu de ressources). Indexer un disque externe d'1To peut ainsi prendre une demi-heure.

Cela est d'autant plus problématique que le boitier d'accès à Internet devra recommencer cette opération d'indexation à chaque fois que les contenus numériques auront été modifiés. En outre, si un utilisateur connecte son disque dur au boitier d'accès Internet d'un ami, l'indexation est entièrement à refaire.

La demande de brevet US2010/0161818 décrit une architecture de partage de données (par exemple au niveau du réseau local d'un immeuble), dans lequel une pluralité d'utilisateurs est connectée à une plateforme de partage sur laquelle est stocké l'index de tout périphérique de stockage du réseau. Cette architecture facilite l'accès réseau aux contenus stockés sur les périphériques des autres usagers, mais ne résout en rien les problèmes de temps de calcul constatés. Par ailleurs, cette architecture génère un trafic réseau important dès que le nombre d'utilisateurs augmente. En effet, toute modification des contenus sur un des moyens de stockage implique la transmission à la plateforme d'un nouvel index complet du disque pour remplacer le précédent.

Il serait ainsi intéressant de disposer d'un nouveau procédé d'indexation qui permette de résoudre ces difficultés.

### PRESENTATION DE L'INVENTION

Selon un premier aspect, la présente invention se rapporte donc à un procédé d'indexation des contenus d'un dispositif de stockage de contenus numériques connecté à un boitier d'accès à Internet, **caractérisé en ce qu'il** comprend des étapes de :
(a) Mise en oeuvre par des moyens de traitement de données du boitier d'accès à Internet ou d'un équipement connecté au boitier d'accès à Internet, d'une indexation partielle des contenus du dispositif de stockage de sorte à générer une liste brute des contenus du dispositif de stockage ;
(b) Transmission de ladite liste à un serveur connecté au boitier d'accès à Internet via le réseau Internet et stockage sur des moyens de stockage de données du serveur ;
(c) Traitement de ladite liste par des moyens de traitement du serveur de sorte à identifier au moins un contenu du dispositif de stockage pour lesquels des informations additionnelles d'indexation sont nécessaires ;
(d) Pour chaque contenu identifié pour lequel des informations additionnelles d'indexation sont nécessaires, requête par le serveur d'une transmission depuis le dispositif de stockage d'au moins un fragment dudit contenu ;
(e) Traitement par les moyens de traitement de données du serveur desdits fragments de contenus de sorte à construire un index complet des contenus dudit dispositif de stockage.

Selon d'autres caractéristiques avantageuses et non limitatives :
- ladite liste brute des contenus du dispositif de stockage contient au moins le chemin d'accès, l'extension et la taille de chaque contenu du dispositif de stockage ;
- ladite liste brute des contenus du dispositif de stockage est obtenue en exécutant une commande de type « List Segments » ;
- le procédé comprend préalablement à l'étape (c) une étape (c1) de recherche sur les moyens de stockage de données du serveur d'un éventuel index existant des contenus dudit dispositif de stockage de contenus numériques ;
- l'étape (d) comprend, si un index existant a été trouvé à l'étape (c1), la comparaison dudit index avec ladite liste brute, les contenus pour lesquels des informations additionnelles sont nécessaires étant les contenus de la liste brute non présents dans ledit index ;
- une position dans un contenu dudit fragment du contenu dont la transmission est requise à l'étape (d) est définie en fonction d'une extension dudit contenu ;
- la position dans un contenu d'un fragment est déterminée par une première valeur de décalage et une deuxième valeur de décalage ;
- l'étape (d) est répétée pour un autre fragment du contenu si des informations additionnelles d'indexation sont encore nécessaires pour le contenu ;
- le procédé comprend une étape préalable d'authentification du boitier d'accès à Internet auprès du serveur de sorte à établir une connexion sécurisée.

Selon un deuxième aspect, l'invention propose un système comprenant au moins un boitier d'accès à Internet et un serveur connecté via le réseau Internet au un boitier d'accès à Internet, le boitier d'accès à Internet et le serveur comprenant des moyens de traitement de données configurés pour la mise en oeuvre du procédé d'indexation selon le premier aspect de l'invention lorsqu'un dispositif de stockage de contenus numériques est connecté au boitier d'accès à Internet.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture de réseau dans lequel est mis en oeuvre un mode de réalisation du procédé selon l'invention ;
- la figure 2 représente un exemple de diagramme flux ou « call flow » entre les différents éléments du réseau lors de la mise en oeuvre d'un mode de réalisation du procédé selon l'invention.

### DESCRIPTION DETAILLEE

### Architecture réseau

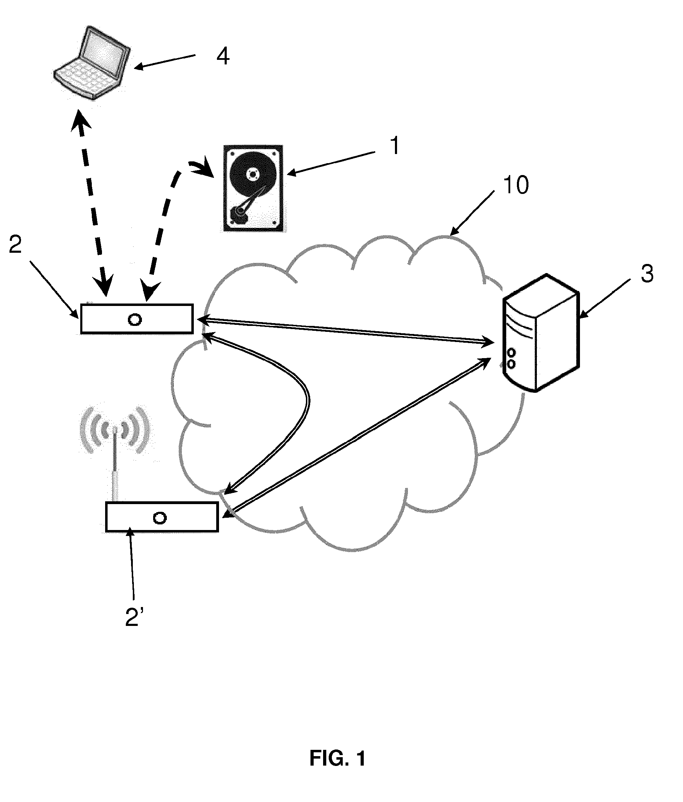

En référence aux dessins et en particulier à la figure 1, l'invention concerne un procédé d'indexation mis en oeuvre au sein d'une architecture comprenant un dispositif de stockage de contenus numériques 1 connecté à un boitier d'accès à Internet 2 (un second boitier d'accès à Internet 2' représenté sera décrit plus loin) permettant une connexion au réseau Internet 10. Le dispositif de stockage de contenus numériques 1 peut être n'importe quel moyen de stockage, relié au boitier 2 par n'importe quelle connectivité.

Par exemple, il peut s'agir d'un disque dur externe connecté de façon filaire au boitier 2 (via USB, eSATA, IEEE 1394, Ethernet, etc.), d'une clé USB directement enfoncée dans un port du boitier 2, du disque dur interne d'un ordinateur 4 connecté par exemple en Wi-Fi au boitier 2, de moyens de stockage d'une set-top box (boitier multimédia), etc.

Par « contenu numérique » on entend tout type de fichiers de données, en particulier les contenus multimédia tels que des films, des musiques, des images, mais également des documents associés à diverses applications. On comprendra que le procédé n'est limité à aucun type particulier de contenu numérique, et permet l'indexation de tout dispositif de stockage 1.

Dans la suite de la présente description, on considèrera que le dispositif de stockage 1 est connecté directement au boitier 2, et que c'est ce dernier qui a le rôle de DMS, en d'autre termes que c'est l'équipement dont les moyens de traitement duquel sont sollicités pour l'indexation. Toutefois, on comprendra que le DMS peut être alternativement un autre équipement (en particulier un PC) via lequel le dispositif de stockage 1 est connecté au boitier 2. Dans ce cas, c'est un logiciel du PC qui va mettre en oeuvre les étapes « d'indexation légère » qui seront décrites plus loin. Le boitier d'accès à Internet 2 sert alors de relais pour la communication avec des serveurs distants. Le procédé d'indexation qui sera décrit n'est limité à aucune configuration en particulier de réseau local, dès lors qu'un boitier 2 est connecté à Internet, qu'un dispositif de stockage 1 est connecté directement ou indirectement à ce boitier 2 et que des moyens de traitement de données sont disponibles localement.

De façon générale, l'architecture globale peut comprendre une pluralité de boîtiers d'accès à Internet 2, avantageusement l'ensemble des boîtiers d'accès à Internet d'un fournisseur d'accès à Internet (en d'autres termes l'ensemble des boîtiers d'accès à Internet 2 connectés à un réseau opérateur donné) et une pluralité de dispositifs de stockage 1 pour chacun des boîtiers d'accès à Internet 2.

L'architecture comprend en outre un serveur 3, ou plate-forme d'indexation, comprenant des moyens de stockage sur lequel seront stockés les index des contenus des différents dispositifs de stockage de contenus numériques 1 connectés à un boîtier 2 connecté au serveur 3. On comprendra que le serveur 3 peut consister en plusieurs serveurs, chacun comprenant des moyens de traitement de données, des moyens de stockage de données. Avantageusement ce ou ces serveur sont disposés dans le réseau opérateur et sont donc en connexion directe avec l'ensemble des boîtiers d'accès à Internet 2 du fournisseur d'accès à Internet (voire des autres fournisseurs d'accès à Internet), comme expliqué précédemment.

### Principe de l'indexation distante

Le procédé selon l'invention propose de partager astucieusement les ressources nécessaires à l'indexation entre le boîtier d'accès à Internet 2 et le serveur 3.

Pour cela, l'indexation est faite, comme on va le voir, en deux grandes parties : dans une première partie une indexation partielle (ou indexation légère) est mise en oeuvre par le boîtier d'accès à Internet 2, et dans une deuxième partie la fin de l'indexation est mise en oeuvre de façon distante par le serveur 3.

Comme expliqué précédemment, l'ensemble des index des contenus du ou des dispositifs de stockage de contenus numériques 1 est au niveau du serveur 3.

Cela permet un accès à cet index depuis l'ensemble du réseau. Ainsi il est possible de déplacer un dispositif de stockage de contenus numériques 1 d'un boîtier d'accès à Internet 2 du réseau opérateur à un autre ou d'accéder à un dispositif de stockage de contenus numériques depuis un autre boîtier d'accès à Internet 2' que celui auquel il est connecté sans qu'il soit nécessaire de remettre en oeuvre une indexation.

Par ailleurs, l'indexation en deux parties est, comme on le verra plus tard, très économe en puissance de calcul, et permet par ailleurs de gérer facilement les ajouts ou suppressions de contenus sur un dispositif de stockage 1 : le procédé permet dans ces cas-là de faire une simple mise à jour de l'index en évitant la nécessité de relancer une indexation complète.

### Etapes du procédé

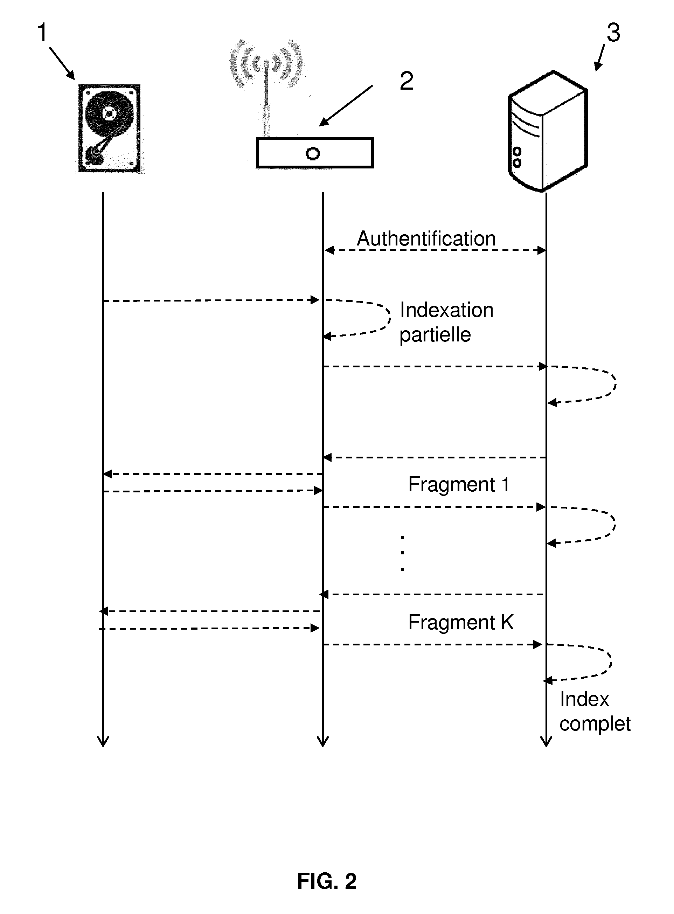

En référence à la figure 2, dans lequel un call-flow illustrant un exemple de mise en oeuvre du procédé proposé est représenté, le procédé selon l'invention comprend une première étape de mise en oeuvre par des moyens de traitement de données du boîtier d'accès à Internet (ou d'un équipement connecté au boitier d'accès à Internet 2 dans le cas mentionné précédemment, dans lequel cet autre équipement tel un PC muni d'un logiciel adéquat réalise les fonctions de DMS) d'une indexation partielle des contenus du dispositif de stockage 1 de sorte à générer une liste brute des contenus de ce dispositif de stockage 1.

Par « liste brute » des contenus du dispositif de stockage 1, on entend une liste contenant le chemin d'accès, l'extension, la taille et si possible l'empreinte de chaque contenu du dispositif de stockage 1. Il suffit juste de pouvoir identifier de manière unique chacun des contenus du dispositif de stockage 1 sans traitement spécifique des contenus.

Une telle liste brute s'obtient très facilement, par exemple via une commande de type « List Segment » (la commande Unix « Is », ou un équivalent). Cette commande, définie par le standard POSIX, est universellement reconnue par les systèmes d'exploitation. Elle permet simplement d'afficher le contenu d'un répertoire, pour une consommation de ressources minime.

Il suffit alors ainsi de la lancer au niveau de la racine du périphérique à indexer, avantageusement dans sa version « longue » (c'est-à-dire avec l'argument « -I ») qui permet d'afficher les fichiers avec leurs permissions, propriétaires, tailles, et dates de modifications. L'argument « -R » permet en outre d'explorer récursivement les sous-répertoires.

Le chemin d'accès, ou « path », d'un contenu est une chaîne de caractères définissant son adresse sur le dispositif de stockage 1 et son nom, par exemple « monDisk - Films/Action/Iron_Man_2_VOST.avi ».

L'extension consiste typiquement en trois caractères (parfois cachés) qui terminent le nom du contenu, par exemple « .avi », « .jpg », « .mov ». L'extension permet de reconnaître le type d'un contenu et la façon dont il est a priori encodé. Alternativement à l'extension, on peut utiliser le « Type MIME » (initialement « Multipurpose Internet Mail Extensions »), c'est-à-dire un standard définissant un type de contenu via un identifiant de format de données en deux parties. Par exemple, un « .avi » est un « video/x-msvideo ». Comme montré dans l'exemple précédent, la connaissance du path suffit souvent pour connaître l'extension d'un contenu.

La taille est une valeur (exprimée en particulier en octets ou un de ses multiples Ko, Mo ou Go) définissant l'espace de stockage occupé par un contenu, par exemple 698.542.858 octets pour un film.

L'empreinte, ou « hash », d'un contenu (qu'on appelle également le « checksum »), est une séquence de caractères résultat de l'application d'une fonction de hachage à un fragment du contenu (par exemple les premiers 200Ko de données, cette valeur pouvant être ajustée selon la puissance des moyens de traitement de données du boitier d'accès à Internet 2) et facilitant l'identification du contenu. Peuvent être également jointes des informations relatives à l'identification du dispositif de stockage 1 et éventuellement d'une pluralité de partitions qu'il pourrait contenir. Cette empreinte est toutefois manquante dans les listes brutes obtenues par un « Is » de base, et sera obtenue dans une étape ultérieure du procédé comme l'on verra plus loin.

La liste brute obtenue est ensuite transmise via le réseau internet au serveur, et stockée sur des moyens de stockage de données du serveur 3. Il est à noter qu'une éventuelle coupure de courant ne bloque que très peu le procédé, contrairement à l'art antérieur dans lequel il fallait tout recommencer : le boitier d'accès à Internet 2 peut tout à fait réaliser la première partie de l'indexation en mode déconnecté du réseau et envoyer la liste brute lorsque la connexion revient.

La liste brute est alors traitée, ce qui correspond au début de la deuxième partie de l'indexation telle que décrite précédemment. Le traitement commence par la vérification que sont bien fournis pour chacun des contenus le chemin d'accès, l'extension, la taille et l'empreinte, ou du moins de quoi identifier de façon unique chaque contenu. Dans le cas contraire, le boitier 2 est réinterrogé.

La finalité du traitement mis en oeuvre au niveau du serveur 3 est d'identifier un ou plusieurs contenus du dispositif de stockage 1 pour lesquels des informations additionnelles d'indexation (par exemple, le hash mentionné précédemment) sont nécessaires pour l'obtention de l'index complet final. Typiquement, les contenus pour lesquels des informations additionnelles d'indexation sont nécessaires sont les contenus indexés pour la première fois.

Le procédé peut en effet comprendre préalablement une étape de recherche sur les moyens de stockage de données du serveur 3 d'un éventuel index existant des contenus dudit dispositif de stockage de contenus numériques 1.

Le contenu est lié à un contenant, i.e. un dispositif de stockage 1. Le serveur 3 commence par vérifier en fonction d'un identifiant du contenant (deviceID) si le le dispositif de stockage est connu, en d'autres termes s'il existe un index déjà associé à ce dispositif.

Si oui, la récupération des informations relatives à ce contenant est initiée.

Le cas contraire, peut être faite une vérification pour les autres contenants (comme si sera réexpliqué plus tard, il est possible qu'un usager ait modifié le nom de son périphérique de stockage 1)

Dans un cas où un index existant du périphérique de stockage 1 a été trouvé, le procédé comprend la comparaison dudit index existant avec ladite liste brute, les contenus pour lesquels des informations additionnelles sont nécessaires étant les contenus de la liste brute non présents dans ledit index.

En particulier, pour chacun des contenus mentionnés par la liste brute :
- si le contenu est déjà référencé par un index, on modifie à la date du jour un champ « date » de l'index qui indique la dernière date de détection du contenu et on modifie à *actif* un champ « Etat » qui indique la présence ou non du contenu (ce champ permet astucieusement de conserver dans un index la trace d'un contenu même s'il a été effacé : si l'utilisateur le remet sur son dispositif de stockage 1 il ne sera pas nécessaire de réindexer ce contenu puisqu'il est déjà connu). Il est à noter qu'un champ « Etat » similaire peut être utilisé pour chaque contenant, ce champ étant mis à *actif* lorsque c'est ce contenant qui est indexé.
- si le contenu n'est pas référencé dans l'index (ou s'il n'y a pas d'index existant), on passe à l'étape suivante, à savoir la récupération d'informations additionnelles d'indexation pour le contenu.

Il est à noter qu'il est également vérifié que tout contenu initialement référencé dans l'index existant est bien toujours stocké dans le dispositif (i.e. qu'il apparait dans la liste brute reçue) dans le cas contraire, son champ « Etat » est passé à *Inactif* dans l'index afin de signaler qu'il a été supprimé.

Pour chaque au moins un contenu, pour lequel des informations additionnelles d'indexation sont nécessaires, identifié, le procédé comprend la requête par le serveur 3 d'une transmission depuis le dispositif de stockage 1 d'au moins un fragment dudit contenu.

En effet, lesdites « informations additionnelles » correspondent à des métadonnées du contenu (i.e. elles sont incluses dans les données du contenu). Par exemple, les premiers 200Ko du fichier permettent d'obtenir le hash si celui-ci est manquant.

De façon avantageuse, un fragment d'un contenu est défini par des « offsets » c'est-à-dire des positions de début et de fin dans ledit contenu, en d'autres termes une première valeur de décalage et une deuxième valeur de décalage par rapport au début du fichier de données du contenu. Le fragment à transmettre est le fragment contenant les métadonnées. La position de ce fragment peut se déduire de l'extension dudit contenu si elle est connue de la liste brute d'indexation partielle.

En effet, tous les fichiers d'un même type ont les métadonnées généralement au même endroit dans la structure de données. La requête envoyée est donc par exemple du type <$X, A, B>, où X est le path du contenu, et A et B les offsets de début et de fin.

Une fois reçu, le fragment est traité par les moyens de traitement du serveur 3 de sorte à extraire lesdites données additionnelles nécessaires pour terminer l'indexation et générer (ou mettre à jour s'il existe déjà) l'index complet.

On remarque qu'il arrive que le fragment récupéré ne soit pas assez long (des données sont toujours manquantes), ou que l'emplacement visé ne soit pas le bon (si l'extension n'était pas la bonne : il arrive fréquemment qu'un utilisateur, en modifiant le nom d'un fichier coupe voire change l'extension). On répète alors l'étape précédent en renvoyant une requête de transmission du fragment suivant, en d'autres termes une requête du type <$X, C, D>, où X est le path du contenu, et C et D les nouveaux offsets de début et de fin (C=B).

Le cas échéant, on répète itérativement jusqu'à soit avoir les informations manquantes soit terminer le fichier. On répète alors l'étape pour chaque contenu pour lequel des informations additionnelles sont requises. Cette répétition est illustrée par la figure 2. On remplit ainsi petit à petit l'index complet.

Avantageusement, on utilise pour les index un modèle de données du type :

```
      USER
             ID ;
             Username ; (voir plus loin)
             Password ;
             Droit ; (révoqué, autorisé, lecture, écriture, total etc.)
             ParentID ; (voir plus loin)
      DEVICE
             ID
             DeviceID ;
             LabelName ; (il s'agit du nom du device, ou bien du nom d'une
             partition dans le cas où il y en aurait plusieurs)
             Date de dernière détection ;
             Etat (actif ou non) ;
      ContentType
             ID ;
             TypeName ; (video, photo, musique, texte, etc.)
      CONTENT
             ID ;
             Path ;
             Type ; (réfère à ContentType)
             Device ; (réfère à DeviceID)
             Taille ;
             Extension ;
             Hash ;
             Etat ; (actif on non)
             Date de dernière détection ;
             Encryption ; (flag 1 ou 0)
```

Les performances de ce procédé sont particulièrement intéressantes car dans la majorité des cas, seul un fragment infime de chaque contenu doit être transmis (quelques centaines de kilooctets pour des fichiers de souvent plusieurs centaines de mégaoctets), et c'est le serveur 3 qui assure la puissance de calcul nécessaire sur cette partie finale du procédé, laquelle est sensiblement réduite par rapport à l'état de l'art dans la mesure où les fragments sont rapidement lus. En outre, ce procédé évite tout travail en double : si seul un contenu est rajouté, nul besoin de refaire toute l'indexation.

Enfin, puisque la partie « lourde » de l'algorithme est centralisée, il est très facile de la mettre à jour, contrairement aux boitiers d'accès à Internet 2.

### Ajout/Suppression de contenu en direct

Tel que décrit précédemment, le procédé d'indexation est en particulier mis en oeuvre à la connexion du dispositif de stockage 1 au boitier d'accès à Internet 2.

Mais il est tout à fait possible de le compléter par une mise en oeuvre « en direct », c'est-à-dire lors de l'ajout ou la suppression d'un contenu pendant que le dispositif est connecté.

Le boitier d'accès à Internet 2 détecte cette action et envoie alors une liste brute à « un élément », en l'espèce comme précédemment le chemin d'accès, l'extension, la taille et l'empreinte de ce contenu (ainsi qu'une éventuelle indication s'il est ajouté ou supprimé).

La suite du procédé tel que décrit précédemment est alors mise en oeuvre pour ce seul contenu.

### Autres modes de réalisation avantageux

L'indexation distante impose des contraintes de confidentialité. En effet, comme l'index du dispositif de stockage de contenus 1 d'un utilisateur est stocké sur le serveur 3, il est essentiel qu'il soit sécurisé pour que des tiers ne puissent obtenir une liste de ces contenus, qui sont personnels. Pour cela, on utilise un compte pour chaque utilisateur, associé par exemple à un couple identifiant (ou login)/mot de passe. D'autres moyens de sécurisation, comme la reconnaissance de l'adresse IP du boiter d'accès à Internet 2, sont possibles.

Différents couples login/mot de passe peuvent par ailleurs permettre d'accéder à un même compte, mais avec des droits différents. Par exemple, seul un login de type Admin permettra d'avoir des droits maximaux (lecture et écriture totale), alors qu'un login de type User donnera seulement des droits de lecture.

Alternativement ou en complément, le paramètre « ParentID » peut permettre de gérer des hiérarchies de comptes, éventuellement reliés aux mêmes index mais avec des droits différents. On a par exemple un compte pour les parents (avec des droits Admin) et des comptes pour les enfants (avec des droits User), le ParentID des comptes enfants étant l'ID du compte des parents.

Pour prendre en compte ces comptes, le procédé comprend alors une étape préalable d'authentification du boitier d'accès à internet 2 auprès du serveur 3 de sorte à établir une connexion sécurisée (par exemple en HTTPS). Cela permet de transférer les données de façon cryptée jusqu'au serveur 3 et de conditionner l'accès à un index existant à un mot de passe.

Comme l'on voit sur la figure 1, il est en outre avantageusement possible de se connecter au serveur 3 via un équipement 4 de l'utilisateur (qui peut être un poste de travail, un smartphone, une tablette tactile, etc.) afin de configurer son compte via une interface dédiée, grâce au même couple login/mot de passe. Une fois authentifié, l'utilisateur peut consulter son index, ou modifier des options (par exemple activer un cryptage supplémentaire des index au niveau du serveur 3). Il est à noter que s'il se connecte via un boitier d'accès Internet 2' qui n'est pas le sien, il peut, si le dispositif 1 est branché et actif, sélectionner un contenu indexé et le consulter. En effet, puisque l'index est « en ligne » le boitier 2' n'a plus besoin de refaire une indexation du dispositif de stockage 1 comme c'était le cas avant. Le serveur autorise ainsi directement l'établissement d'une connexion sécurisée (par exemple un tunnel) entre les boitiers d'accès Internet 2 et 2' pour la transmission (en streaming ou en téléchargement) du contenu.

On note qu'un utilisateur peut se connecter à l'interface de gestion de son compte sur le serveur 3 de n'importe où (et pas seulement du réseau opérateur).

Par ailleurs, comme mentionné précédemment, une difficulté peut survenir si un utilisateur change le nom de son dispositif de stockage. Dans l'art antérieur il fallait recommencer l'indexation, mais la structure de données mentionnée précédemment des index stockés dans le serveur 3 permet de contourner cette difficulté, il suffit de modifier le champ « LabelName».

Avantageusement, pour des questions d'efficacité et pour ne pas prendre de risque de confusion de dispositifs, on choisit de récréer un nouvel index (comme si le dispositif ayant changé de nom était un dispositif distinct du précédent) si on détecte qu'au moins un contenu a en outre changé (ajout ou suppression).

### Système

Selon un deuxième aspect, est proposé un système comprenant au moins un boitier d'accès à Internet 2 et un serveur 3 connecté via le réseau Internet 10 au un boitier d'accès à Internet 2 qui permet la mise en oeuvre du procédé d'indexation précédemment décrit.

Pour cela, le boitier d'accès à Internet 2 et le serveur 3 comprenant des moyens de traitement de données configurés pour la mise en oeuvre de ce procédé lorsqu'un dispositif de stockage de contenus numériques 1 est connecté au boitier d'accès à Internet 2.

## Revendications

1. Procédé d'indexation des contenus d'un dispositif de stockage de contenus numériques (1) connecté à un boitier d'accès à Internet (2), **caractérisé en ce qu'il** comprend des étapes de :
(a) Mise en oeuvre par des moyens de traitement de données du boitier d'accès à Internet (2) ou d'un équipement connecté au boitier d'accès à Internet (2), d'une indexation partielle des contenus du dispositif de stockage (1) de sorte à générer une liste brute des contenus du dispositif de stockage (1) ;
(b) Transmission de ladite liste à un serveur (3) connecté au boitier d'accès à Internet (2) via le réseau Internet (10) et stockage sur des moyens de stockage de données du serveur (3) ;
(c) Traitement de ladite liste par des moyens de traitement du serveur (3) de sorte à identifier au moins un contenu du dispositif de stockage (1) pour lesquels des informations additionnelles d'indexation sont nécessaires ;
(d) Pour chaque contenu identifié pour lequel des informations additionnelles d'indexation sont nécessaires, requête par le serveur (3) d'une transmission depuis le dispositif de stockage (1) d'au moins un fragment dudit contenu ;
(e) Traitement par les moyens de traitement de données du serveur (3) desdits fragments de contenus par le serveur (3) de sorte à construire un index complet des contenus dudit dispositif de stockage (1).

2. Procédé selon la revendication précédente, dans lequel ladite liste brute des contenus du dispositif de stockage (1) contient au moins le chemin d'accès, l'extension et la taille de chaque contenu du dispositif de stockage (1).

3. Procédé selon la revendication précédente, dans lequel ladite liste brute des contenus du dispositif de stockage est obtenue en exécutant une commande de type « List Segments ».

4. Procédé selon l'une des revendications précédentes, comprenant préalablement à l'étape (c) une étape (c1) de recherche sur les moyens de stockage de données du serveur (3) d'un éventuel index existant des contenus dudit dispositif de stockage de contenus numériques (1).

5. Procédé selon la revendication 4, dans lequel l'étape (d) comprend, si un index existant a été trouvé à l'étape (c1), la comparaison dudit index avec ladite liste brute, les contenus pour lesquels des informations additionnelles sont nécessaires étant les contenus de la liste brute non présents dans ledit index.

6. Procédé selon l'une des revendications précédentes, dans lequel une position dans un contenu dudit fragment du contenu dont la transmission est requise à l'étape (d) est définie en fonction d'une extension dudit contenu.

7. Procédé selon la revendication précédente, dans lequel la position dans un contenu d'un fragment est déterminée par une première valeur de décalage et une deuxième valeur de décalage.

8. Procédé selon l'une des revendications 6 ou 7, dans lequel l'étape (d) est répétée pour un autre fragment du contenu si des informations additionnelles d'indexation sont encore nécessaires pour le contenu.

9. Procédé selon l'une des revendications précédentes, comprenant une étape préalable d'authentification du boitier d'accès à Internet (2) auprès du serveur (3) de sorte à établir une connexion sécurisée.

10. Système comprenant au moins un boitier d'accès à Internet (2) et un serveur (3) connecté via le réseau Internet (10) au un boitier d'accès à Internet (2), le boitier d'accès à Internet (2) et le serveur (3) comprenant des moyens de traitement de données configurés pour la mise en oeuvre du procédé d'indexation selon l'une des revendications précédentes lorsqu'un dispositif de stockage de contenus numériques (1) est connecté au boitier d'accès à Internet (2).
